Europäisches Patentamt

European Patent Office  (11) Publication number: **0 016 616**

Office européen des brevets  **A1**

(12) **EUROPEAN PATENT APPLICATION**

(21) Application number: 80300782.2

(22) Date of filing: 13.03.80

(51) Int. Cl.³: **B 23 B 31/04**
**B 23 B 51/00**

(30) Priority: 16.03.79 CA 323670

(43) Date of publication of application:
01.10.80 Bulletin 80/20

(84) Designated Contracting States:
BE DE FR GB IT NL SE

(71) Applicant: J.P. TOOL LIMITED
4011 Malden Road
Windsor Ontario(CA)

(72) Inventor: Proulx, Sylvester Eugene
10 Summer Court
Windsor Ontario(CA)

(72) Inventor: Beneteau, Stanley Alexander
506 Pearl Street
Tecumseh Ontario(CA)

(74) Representative: Leale, Robin George et al,
FRANK B. DEHN & CO. Imperial House 15-19 Kingsway
London WC2B 6UZ(GB)

(54) Rotary cutting tool, and tool driver and holder.

(57) A tool driver and holder for rotary cutting tools, such as reamers and drill bits, comprises a shank member (10) having a cylindrical portion (11) projecting axially from one end thereof and this cylindrical portion (11) has at least two tool securing and driving spline members (12) projecting longitudinally from the end thereof remote from the shank (10). These spline members have arcuate outer faces (21) and radially inwardly extending side faces merging into a convex inner face to provide a central axial gap and symmetrically disposed radial gaps therebetween. A cylindrical sleeve member (14) is rotatably mounted on the cylindrical portion (11) and splines (12) and this sleeve member (14) has at the outer ends thereof radially inwardly projecting tool holding tab members (15). The sleeve (14) and associated tab members (15) are positionable between a tool securing and a tool releasing position.

The tool holder is adapted to receive a symmetrical reversible fluted cutting tool (19) of generally cylindrical outer configuration having curvilinear flutes formed in the outer face thereof symmetrically disposed about and extending the length of the tool body, defining peripheral lands between the flutes, retaining indentations (29) formed in the lands at the mid point of the tool body, and cutting edges formed in both end regions of the tool.

./...

Croydon Printing Company Ltd.

FIG. 1

- 1 -

"Rotary cutting tool, and tool driver
and holder"

This invention relates to a rotary cutting tool
driver and holder, particularly for straight fluted
cutting tools such as reamers and drill bits, as
well as to novel fluted cutting tools adapted for
use with such a driver and holder.

A wide variety of rotary cutting tools are known
such as twist drills, reamers, end mills, etc. having
shanks of various configurations for mounting in the
chuck of a drill press or milling machine.  The usual
chuck has a threaded sleeve member moving over tapered
surfaces which contract around the shank to hold it
tightly in position.  The torque load between the chuck
and the shank of the cutting tool is then borne fully
by the metal-to-metal pressure between the two faces.

Other cutting tools of this type are held within
a chuck by means of set screws which engage notches or
recesses in the cutting tool shank.

Cutting tools of this type are widely used in
metals manufacturing industries, particularly the automotive industry.  In such service they are subjected
to very intensive use and quickly become dull.  Thus,
they are changed frequently so that sharp cutting
edges will always be in use.

There is, therefore, a need for a very simple and
positive system for removing dull cutters and inserting
sharp cutters without the need of special tools, etc.
It is particularly desirable to have a system which can
be manually locked and unlocked without the need of any
separate tools.

Viewed from one aspect this invention provides a
rotary cutting tool driver and holder comprising a shank member having a cylindrical portion projecting axially from one end thereof, said cylindrical portion having at least two tool driving spline members projecting longitudinally from the end thereof remote from the shank, each said spline member having an outer face and radially inwardly extending side faces merging into a convex inner face, said spline members providing therebetween a central axial gap and symmetrically disposed radial gaps, and a tool holding cylindrical sleeve member rotatably mounted on said cylindrical portion and spline members, said sleeve member having radially inwardly projecting tool holding tab members and being rotatable between a tool securing and a tool releasing position.

The cylindrical sleeve is fixed against axial movement and the tabs serve to secure a cutting tool within the device by engaging indentations in lands between flutes of the cutting tool. The sleeve member may include a locking mechanism which retains the sleeve member in the tool securing position unless forcibly turned to the releasing position, preferably manually.

The sleeve tab members are preferably symmetrically disposed and equal in number to the radial gaps. In tool releasing position, the tabs preferably overlie the outer ends of the spline members, while in tool securing positions they preferably overlie the outer ends of the radial gaps.

According to a particular preferred embodiment of the invention, the arcuate outer faces of the spline members define extensions of the cylindrical portion and these spline members may have at the outer ends thereof longitudinal projections with arcuate outer faces radially inwardly offset from the spline outer faces. These projections are radially aligned with the sleeve end tabs and the outer faces thereof preferably have a diameter which corresponds to the diameter of the bottoms of the indentations in the lands of the cutting tool. In this manner, the bottoms of the cutting tool indentations and the outer faces of the projections form a complete circle. The inner edges of the tab members then travel along this circular path.

Viewed from another aspect the invention provides a symmetrical reversible fluted cutting tool of generally cylindrical outer configuration having at least two curvilinear flutes formed in the outer face thereof symmetrically disposed about and extending the length of the tool body, defining peripheral lands between said flutes, each juncture of a flute and an associated land forming a peripheral guide edge and chip relief gullet, retaining indentations formed in the lands at the mid point of the tool body, and cutting edges formed in both end regions of the tool.

Since such a cutting tool has cutting edges at both ends, when one end becomes dulled it is a simple matter to manually remove the cutting tool and reverse it to expose a sharp end. When both ends have become dulled, they can be sharpened for re-use or simply thrown away.

The flutes are preferably straight flutes and each peripheral land preferably includes a clearance diameter portion. Each cutting tool preferably has 2-6 flutes and is typically in the form of a reaming bit, a drill bit, a thread cutting tap or an end mill.

When the cutting tool is inserted into the tool driver and holder of this invention, the inner end of the cutting tool abuts against the end of the cylindrical portion adjacent the start of the spline members. In this manner, the full axial load is carried by the cylindrical portion and none of the axial load need be carried by the tab members of the sleeve. The torque load on the cutting tools is carried by face-to-face contact between the inwardly projecting faces of the spline members and faces of the flutes of the cutting tool. Each spline member has radially inwardly extending side faces merging into a convex inner face and this convex inner face is preferably shaped to locate and conformably engage the curvilinear flutes of the cutting tool. In this manner the cutting tool is snugly held within the driver without any substantial lateral movement.

Another advantage of this arrangement is that cutting tools of differing cutting diameters can be inserted into a common driver and holder without any need to adjust that device itself. Thus, the cutting tools can all be produced with a common central web dimension and a common dimension for the inner portions of the flutes. The only variable is then the actual radially outward projections of the flutes. Thus, the outer faces of the flutes do not actually engage the inner face of the cylindrical sleeve and the cutting tools are entirely held by the contact between the central web portion and flute inner portions of the cutting tools and the inner faces of the splines.

The cylindrical portion of the device can also be provided with an axially adjustable central abutment for engaging the ends of cutting tools of different lengths. Thus, when cutting tools have been sharpened and their length thereby shortened, the abutment can be adjusted so that the axial load is still fully

- 5 -

carried by the cylindrical portion of the device, while the sleeve tabs still engage the indentations in the lands without carrying any axial load.

The device of this invention can be used with any kind of cutting tool having two or more flutes. Although it is particularly advantageous to utilize cutting tools with cutting faces on both ends, it will be appreciated that the invention is equally adapted to cutting tools having cutting faces at only one end.

Some embodiments of the invention will now be described by way of example and with reference to the accompanying drawings, in which:-

Figure 1 is an exploded view of a straight fluted reamer, together with a driver and holder device therefor;

Figure 2 is a partial sectional view of the device shown in Figure 1;.

Figure 3a is an end elevation of the device shown in Figure 2 in position to receive a cutting tool;

Figure 3b is the same view as Figure 3a with a cutting tool inserted;

Figure 3c is the same view as Figure 3b but with the cutting tool locked into operational position;

Figure 4a is a side elevation of a straight fluted reamer;

Figure 4b is an end elevation of the reamer shown in Figure 4a;

Figures 5a, 5b and 5c show a side elevation of a larger reamer, and end elevations of the reamer inserted in a driver and holder device in tool-releasing position and tool-securing position respectively;

Figures 6a, 6b and 6c show a medium size reamer, and end elevations of the reamer in a driver and holder device in tool-releasing position and tool-securing position respectively;

Figures 7a, 7b and 7c show a side elevation of a small reamer, and end elevations of the reamer in a driver and holder device in tool-releasing position and tool-securing position respectively;

Figure 8 is a perspective view of a straight fluted drill bit mounted in a driver and holder device according to the invention;

Figure 9a is a side elevation of a two flute drill;

Figure 9b is an end elevation of the drill shown in Figure 9a;

Figure 10a is an end elevation of the driver and holder device shown in Figure 8;

Figure 10b is a side elevation showing details of the device of Figure 8;

Figure 10c is an end elevation of the device shown in Figures 10a and 10b with the drill bit inserted in tool-releasing position;

Figure 10d is an end elevation of the arrangement in Figure 10c but in tool-securing position;

Figure 11a is an end elevation of a five-flute, straight fluted reamer mounted in a driver and holder device in tool-releasing position;

Figure 11b is the reamer of Figure 11a in tool-securing position; and

Figure 12 is a sectional view of a tool driver and holder device according to Figure 8 with an abutment adjustment.

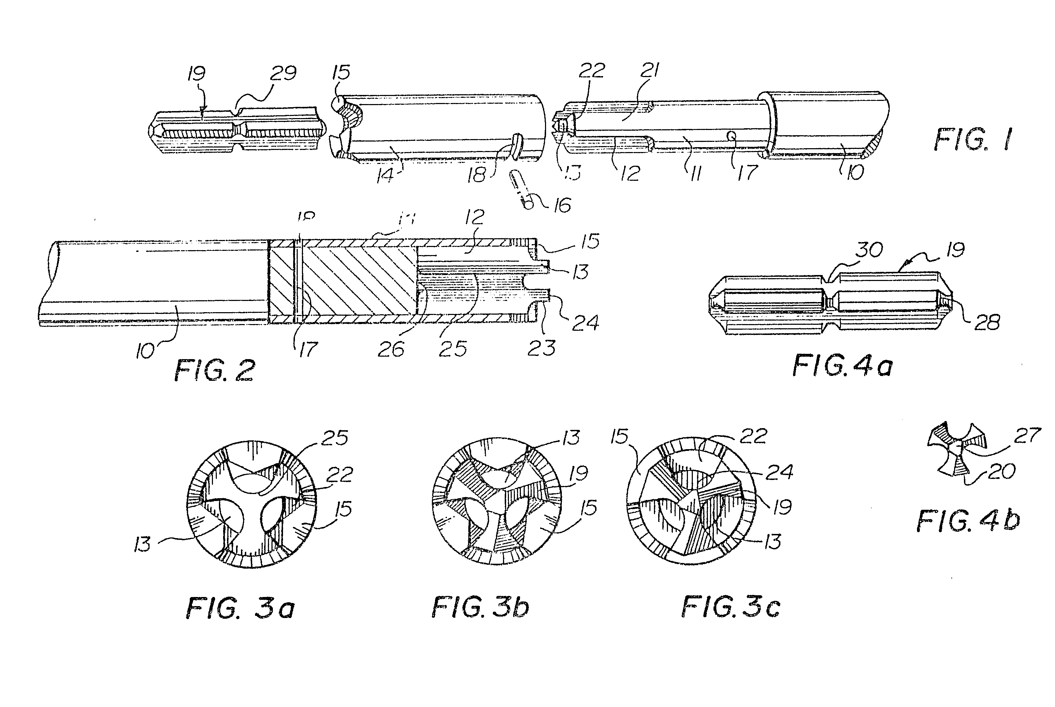

Looking now at the drawings in detail, 10 represents a typical shank member which may be straight, tapered, etc. as used in typical drill presses, milling machines, etc. This shank 10 includes at one end thereof a cylindrical portion 11 with longitudinally projecting spline members 12. Projecting from the ends of these spline members are short end tips 13. The splines 12 have

arcuate outer faces 21 preferably of the same curvature as cylindrical member 11. The outer faces 23 of end tips 13 are also preferably curvilinear in shape and are radially inwardly offset from the faces 21, with an inwardly sloping end face portion 22 extending between outer face 21 and inner face 23. The tips 13 terminate in end faces 24 and the splines 12 and tips 13 have a common convex inner face 25 which can be curved in the manner shown in Figure 3.

A cylindrical sleeve member 14 fits snugly but rotatably over the cylindrical member 11 and splines 12. This sleeve member 14 has at the outer end thereof inwardly projecting tabs 15 which in operative position are adjacent the end tips 13, with the inner edges of tabs 15 moving in close proximity to the curved tip faces 23 as shown in Figure 2. The sleeve 14 has a slot 18 which corresponds longitudinally in position to a hole 17 extending through the cylindrical member 11. A pin 16 extends into hole 17 whereby the amount of rotation of sleeve 15 is limited by the length of the slot 18.

A straight flute reamer 19 is shown fitting into the driver. This cutting tool is shown with three straight flutes forming lands 20 therebetween joined to a web portion 27. The ends of the tool have chamfers 28 defining cutting edges and each land has a central indentation or notch 29. The bottom faces 30 of these notches are of the same diameter as the outer faces 23 of end tips 13 and longitudinally aligned with these tips 13 so that the tabs 15 of sleeve 14 can turn into and out of engagement with the notches 29. When installed into the driver, the inner end of the cutting tool abuts against the inner end face 26 of the holder. This end face then carries the full axial load of the cutting tool in operation and none of this load need be carried by the tabs 15. The tabs 15 merely serve to prevent the cutting tool 19 from falling out of the driver.

The slot 18 in sleeve 14 is so positioned and is of such length that when turned to one extremity, the tabs 15 are positioned between the notches 29 as shown in Figure 3b, while at the other extremity, the tabs 15 are in engagement with the notches 29 as shown in Figure 3c. If desired, a spring loaded locking mechanism may be utilized to generally bias the sleeve 14 in the tool-securing position of Figure 3 such that the sleeve 14 can be removed from that position only by way of a brisk manual rotation thereof. This prevents the mechanism from accidentally unlocking.

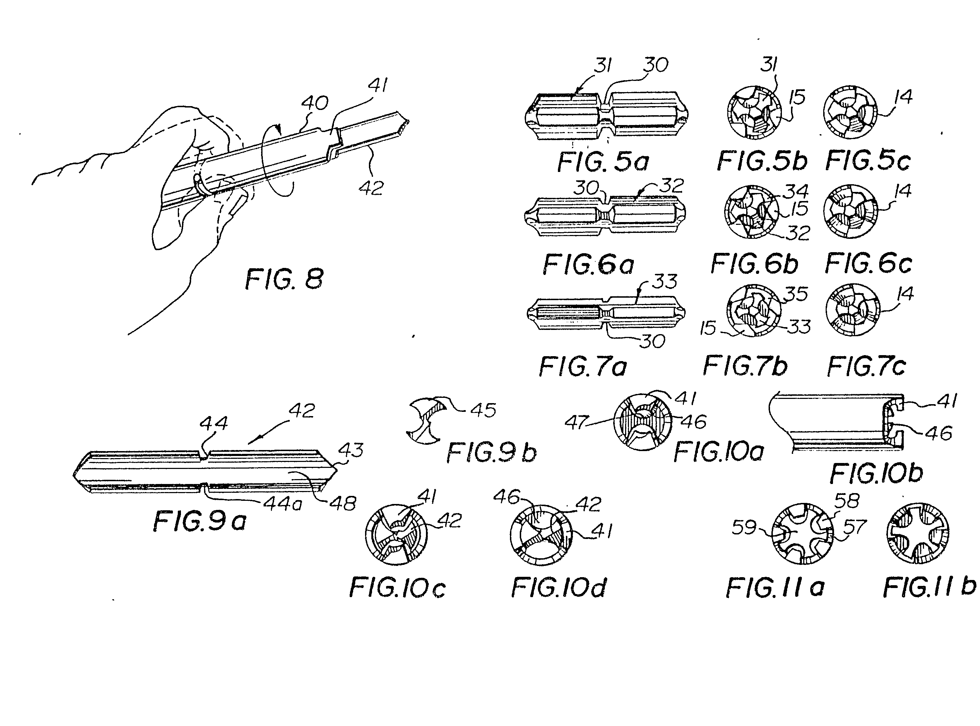

Figures 5, 6 and 7 illustrate how the same tool driver as shown in Figures 1 and 2 can be utilized without any form of adjustment to retain cutting tools of different cutting diameters. Figures 5a, 6a and 7a show a large reamer 31, a medium size reamer 32 and a small reamer 33, respectively, but the bottoms 30 of the notches or indentations 29 of each of these reamers is of identical diameter, that being the diameter of the outer faces 23 of end tips 13. Figures 5b, 6b and 7b show the reamers in position in the driver in tool-releasing position and it will be seen from Figure 5b that for the largest reamer the outer faces of the lands 20 just clear the inner face of sleeve 14, while in Figure 6b the outer faces of the lands 20 extend inwardly some distance 34 from the inner face of sleeve 14 and in Figure 7b the outer faces of lands 20 extending inwardly an even greater distance 35 from sleeve 14. Notwithstanding these differences, all different sizes are held equally well by the driver because the web portions 27 and the adjacent inner faces of the flutes of the different reamers 19 are all of identical dimensions which smoothly mate with the convex inner faces 25 of the splines 12 and tips 13. Thus, the full torque load on the cutters is carried by the contact between the inner faces of splines 12 and the inner faces of the flutes of the reamers 19.

While the above discussion has all related to reamers with three straight flutes, it will be appreciated that the principles discussed are equally applicable to any kind of straight flute cutting tool containing two or more flutes. Typically about 2 to 6 flutes are preferred.

Another embodiment of the invention is illustrated by Figure 8 which shows a driver having a sleeve member 40 with a pair of inwardly projecting end tabs 41. This arrangement is designed to retain a two flute cutting tool, such as drill 42. This drill has sharpened cutting ends 43 with each land between pairs of flutes having a central notch or indentation 44. The bottoms 44a of these notches 44 are of the same or slightly smaller diameter than the inner edges of end tabs 41 so that the tabs 41 will mate within the notches 44 in the tool-securing position.

The drill bit 42 has outer land faces 45 which fit within sleeve 40 and each drill has flutes 48 curved to mate with the convex inner faces 47 of splines 46. Thus, the drill bit 42 fits snuggly within the splines 46 for torque transfer and the drill bits are held in position by means of the end tabs 41 which mate with the indentations 44. In this embodiment, the splines 46 were made without projecting end tips radially adjacent the tabs 41 and the splines terminated a short distance before the tabs 41 as shown in Figure 10b. An easy locking and unlocking operation was still obtained.

Thus, Figures 10a and 10b illustrate the driver in tool-releasing position ready to receive a bit, Figure 10c shows the end of the holder with the bit inserted prior to securing and Figure 10d shows the bit in place with the tabs 41 in the tool-securing position.

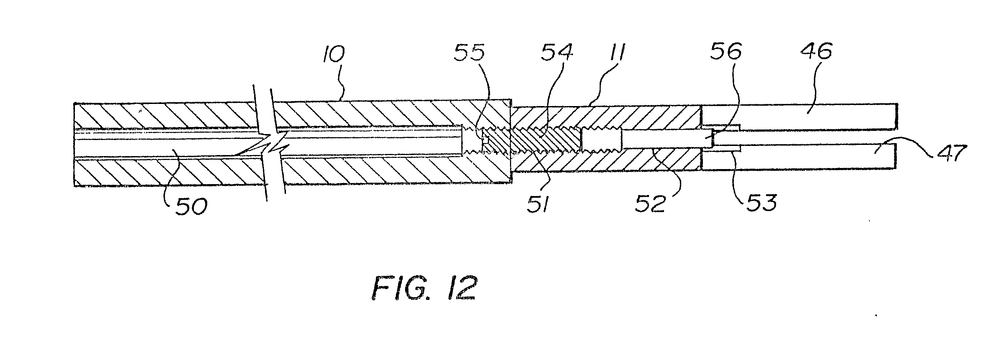

Figures 11a and 11b show a five-flute reamer 59 within a driver having a tubular sleeve 57 with end tabs

58. Figure 11a shows the reamer in place prior to securing and Figure 11b shows the bit in place with the tabs 58 in the tool-securing position.

The tool driver can be adapted to retain cutting tools of varying lengths by providing an adjustable abutment. This is illustrated in Figure 12 and it will be seen that the shank 10 contains an axial bore 50 which converts to a threaded bore 51 and finally a smaller smooth bore 52. Recesses 53 are also cut into the inner faces 47 of the splines 46. Mounted within the threaded bore 51 is a threaded member 54 having at one end a slot 55 to receive a screw-driver and a flat opposite end 56. This flat end 56 is the portion which engages the end of a cutter mounted within the splines 46 and is adjusted such that the full axial load on a cutter is always supported entirely by the abutment 56.

CLAIMS:

1. A rotary cutting tool driver and holder comprising a shank member having a cylindrical portion projecting axially from one end thereof, said cylindrical portion having at least two tool driving spline members projecting longitudinally from the end thereof remote from the shank, each said spline member having an outer face and radially inwardly extending side faces merging into a convex inner face, said spline members providing therebetween a central axial gap and symmetrically disposed radial gaps, and a tool holding cylindrical sleeve member rotatably mounted on said cylindrical portion and spline members, said sleeve member having radially inwardly projecting tool holding tab members and being rotatable between a tool securing and a tool releasing position.

2. A device as claimed in claim 1, wherein said tab members are symmetrically disposed around the outer end of said sleeve member, said tab members being axially aligned with said spline members in said tool releasing position and axially aligned with said radial gaps in said tool securing position.

3. A device as claimed in claim 1 or 2, wherein the outer faces of the spline members are arcuate and define extensions of the said cylindrical portion.

4. A device as claimed in claim 3, wherein said spline members have on the outer ends thereof longitudinal projections with arcuate outer faces radially inwardly offset from said spline member outer faces.

5.    A device as claimed in any preceding claim, including locking means for locking the sleeve member in tool securing position.

6.    A device as claimed in any preceding claim, which has an axially adjustable abutment face for engaging the ends of cutting tools of different lengths.

7.    A device as claimed in any preceding claim, which is adapted to receive a fluted cutting tool of generally cylindrical outer configuration and having curvilinear flutes formed in the outer face thereof, the convex inner faces of said spline members being shaped to locate and conformably engage the curvilinear flutes of such a cutting tool when assembled therewith.

8.    A device as claimed in claim 7, wherein the tab members on said sleeve member are shaped so as, in tool securing position,  to engage indentations in lands between the flutes of such a cutting tool when assembled therewith.

9.    A device as claimed in any preceding claim, in combination with a symmetrical, reversible straight fluted cutting tool mountable axially in said device with the flutes conformably engaging said spline convex inner faces and the inner end of said tool abutting an abutment face within said device, said cutting tool having at least two said flutes formed in the outer face thereof defining peripheral lands therebetween and indentations in said lands engageable by said tab members in tool securing position.

10. An apparatus as claimed in claim 9, wherein the cutting tool is a drill bit, or a reamer, or a tap or an end mill.

11. A symmetrical reversible fluted cutting tool of generally cylindrical outer configuration having at least two curvilinear flutes formed in the outer face thereof symmetrically disposed about and extending the length of the tool body, defining peripheral lands between said flutes, each juncture of a flute and an associated land forming a peripheral guide edge and chip relief gullet, retaining indentations formed in the lands at the mid point of the tool body, and cutting edges formed in both end regions of the tool.

12. A cutting tool as claimed in claim 11, wherein the flutes are straight flutes and the tool is a drill bit, a reamer, a thread cutting tap or an end mill.

FIG. 1

FIG. 2

FIG. 3a

FIG. 3b

FIG. 3c

FIG.4a

FIG. 4b

FIG. 8

FIG. 5a    FIG. 5b    FIG. 5c

FIG. 6a    FIG. 6b    FIG. 6c

FIG. 7a    FIG. 7b    FIG. 7c

FIG. 9a    FIG. 9b    FIG. 10a    FIG. 10b

FIG. 10c    FIG. 10d    FIG. 11a    FIG. 11b

FIG. 12

47 46 56 53 52 11 54 51 55 10 50

**European Patent Office**

## EUROPEAN SEARCH REPORT

Application number

EP 80 30 0782.2

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 1 522 125 (C.R. HOLMES) <br> * page 1, line 66 to page 3, line 7; fig. 1 to 5 * <br> -- | 1-3,5 | B 23 B 31/04 <br> B 23 B 51/00 |
| | DE - A - 1 904 862 (G.E. HENDRICKS) <br> * claims 1 to 4, 6, 12; fig. 1 to 10 * <br> -- | 1,7 | |
| | DE - C - 319 305 (J. RUNKEL) <br> * claims 1, 2; fig. 1 to 6 * <br> -- | 1,7 | |

| | | | TECHNICAL FIELDS SEARCHED (Int.Cl.³) |
|---|---|---|---|
| | FR - A - 1 200 029 (A. ROUGIER) <br> * page 1, left column, lines 30 to 39; page 2, right column, lines 8 to 34 * <br> -- | 7,11, 12 | B 23 B 31/00 <br> B 23 B 51/00 <br> B 23 C 5/26 <br> B 23 D 75/00 <br> B 23 D 77/00 <br> B 23 G 5/06 <br> B 23 Q 3/00 |
| | DD - A - 45 652 (H. SCHNEIDER) <br> * claim 5 * <br> -- | 6 | |
| | US - A - 3 531 810 (C.J. FURE) <br> * complete document * <br> -- | 11,12 | |

| | | | CATEGORY OF CITED DOCUMENTS |
|---|---|---|---|
| | US - A - 2 424 113 (H. NORBERG et al.) <br> * complete document * <br> -- | 11,12 | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| A | US - A - 2 533 179 (J.M. REDINGER) <br> -- | | |
| A | DE - C - 879 191 (P. MUCKENHAUPT) <br> ---- | | |

&: member of the same patent family, corresponding document

X | The present search report has been drawn up for all claims

| Place of search | Date of completion of the search | Examiner |
|---|---|---|
| Berlin | 25-06-1980 | MARTIN |

EPO Form 1503.1  06.78